# EUROPÄISCHE PATENTSCHRIFT

(11) **EP 0 331 986 B1**
(45) Veröffentlichungstag und Bekanntmachung des Hinweises auf die Patenterteilung: **17.02.1993**
(21) Anmeldenummer: 89103224.5
(22) Anmeldetag: 24.02.1989
(51) Int. Cl.: B65G 47/64

(54) **Förderanlage für Packgutstapel**
Conveyors for piles of articles
Convoyeur de paquets d'objets

(30) Priorität: 29.02.1988 DE 8802652 U
(43) Veröffentlichungstag der Anmeldung: 13.09.1989
(73) Patentinhaber: Maschinenfabrik Gerd Mosca GmbH, D-69428 Waldbrunn-Str. (DE)
(72) Erfinder: Mosca, Gerd, D-6935 Waldbrunn-Schollbrunn (DE)
(74) Vertreter: Freischem, Werner, Dipl.-Ing.

(56) Entgegenhaltungen:
- DE-B- 1 289 777
- DE-C- 914 957
- DE-U- 8 810 077
- FR-A- 2 169 999

## Beschreibung

Die Erfindung betrifft eine Förderanlage mit einer Weiche, welche einen Zubringer mit einem Förderer einer ersten Förderlinie oder einem Förderer einer zweiten Förderlinie verbindet und welche mittels eines Schwenkantriebes um eine vertikale, in gleichem Abstand zu ihren Bahnenden angeordnete Achse schwenkbar ist, wobei in einer ersten Umlenkstellung ein erstes Bahnende an den Zubringer und ein zweites Bahnende an den Förderer der ersten Förderlinie anschließt und in einer zweiten Umlenkstellung das erste Bahnende an den Förderer der zweiten Förderlinie und das zweite Bahnende an den Zubringer anschließt.

Eine Förderanlage dieser Art ist bekannt aus der DE-C-914 957. Die bekannte Förderanlage betrifft eine Rollenbahnkreuzung mit einer um eine vertikale Achse drehbaren Weiche, welche zwei symmetrisch zueinander angeordnete bogenförmige Bahnstücke aufweist, die an ihren Enden auf einem ortsfesten Kranz abgestützt sind und die je nach Stellung der Weiche jeweils zwei der rechtwinklig zueinanderstehenden Rollenbahnen miteinander verbinden. Bei den beiden bogenförmigen Bahnstücken handelt es sich um 90°-Bogenstücke, deren Scheitelpunkte einander zugekehrt sind. Zwischen den Scheitelpunkten der Bogenstücke befindet sich die Drehachse der Weiche. Für eine Förderanlage, bei der Packgutstapel ungebündelt und unverpackt in schneller Folge von einem Zubringer über eine Umlenkvorrichtung und einer ersten Förderlinie oder einer zweiten Förderlinie einer Umschnürungsstation oder Verpackungsstation zugeführt wird, ist die bekannte Weiche wenig geeignet, weil zwischen dem Zubringer und den beiden Förderlinien einerseits und den Enden der Bogenstücke der bekannten Weiche relativ große Lücken notwendig sind, damit die Weiche in der Ebene des Zubringers und der Förderlinien sich drehen läßt. Auch sind 90°-Bogenstücke für derartige Förderanlagen ungeeignet, weil damit ausgerüstete Weichen zur Erzielung eines großen Kurvenradius sehr viel Raum beanspruchen müßten oder aber die Packgutstapel sehr langsam über die 90°-Bogenstücke gefördert werden müßten.

Die erfindungsgemäße Förderanlage ist bestimmt zum Transport von losen, d.h. ungebündelten oder unverpackten Stapeln von Zeitungen, Zeitschriften, Magazinen oder ähnlichem Packgut, das beispielsweise von einer automatischen Rotationsdruckerpresse in schneller Folge ausgeworfen wird. Diese sind zu losen Stapeln von 30 bis 50 cm Höhe aufgeschichtet und werden von der Förderanlage zu Verpackungsstationen gefördert und dort zu festen Bündeln umschnürt, umhüllt oder verpackt. Dabei beträgt die Fördergeschwindigkeit beispielsweise 30 m/Min. und die Stapel folgen einander in der Förderlinie in gleichmäßigen Abständen von etwa 80 cm in einer Taktfolge von 1,8 Sek. Bei einer solchen Förderanlage ist mindestens einer ersten Förderlinie mit einer Verpackungsstation eine zweite Förderlinie zugeordnet, die ebenfalls eine Verpackungsstation aufweist und die zum Einsatz kommt, wenn die erste Förderlinie durch eine Störung ausfällt. Zwischen den beiden Förderlinien und dem Zubringer befindet sich eine Umlenkvorrichtung, welche die Aufgabe hat, den mit dem Zubringer ankommenden Fördergutstrom wahlweise auf die eine oder auf die andere Förderlinie zu überführen, wenn eine Störung an einer Verpackungsstation auftritt. Diese Förderanlage setzt sich aus mehreren unabhängig voneinander antreibbaren Fördervorrichtungen, insbesondere Förderband-Vorrichtungen zusammen.

Vielfach werden zur Überführung von Gegenständen von einem Förderer auf einen anderen auch Schubmittel verwendet. Damit sind beispielsweise sogenannte Eckpusheranlagen ausgebildet. Für unverpackte Packgutstapel bei entsprechender Stapelhöhe und Fördergeschwindigkeit sind solche Übergabemittel, wie Drehtische oder Pusher, ungeeignet, weil durch plötzliches Abbremsen oder Beschleunigen der Packgutstapel diese umkippen können oder zumindest ein die Verpackung beeinträchtigender Versatz der Stapel verursacht wird.

Aus der FR-A-2 169 999 ist zum Drehen von Werkstückpaketen für die Sachfertigung ein heb- und absenkbarer Drehtisch mit einem geradlinigen,reversierbaren Bandförderer bekannt. Zur Umstellung des Drehtisches um 180° kann der Drehtisch aus der Transportebene in eine Schwenkebene gehoben und nach einer 180°-Drehung wieder abgesenkt werden.

Der Erfindung liegt die Aufgabe zugrunde, eine Förderanlage mit Weiche der eingangs genannten Art derart auszubilden, daß die Packgutstapel ohne Unterbrechung der Förderung von einem Zubringer wahlweise auf eine von zwei weiterführenden Förderlinien überführt werden können, ohne daß ein Verziehen oder sonstiger Versatz der Packgutstapel verursacht wird und das Umlenken von einer Förderlinie zur anderen unkompliziert und kurzzeitig erfolgt.

Die Lösung dieser Aufgabe wird dadurch erreicht, daß die Weiche nur eine bogenförmige Bahn sowie einen eigenen reversierbaren Förderantrieb und eine Hub- und Absenkvorrichtung zum Versetzen der Weiche aus einer Transportebene in eine Schwenkebene und zurück aufweist.

Durch die Ausgestaltung der Weiche mit nur einer bogenförmigen Bahn und eigenem reversierbaren Förderantrieb wird ein Überführen des Transportgutes vom Zubringer auf eine von zwei weiterführenden Förderlinien bei stetiger Richtungsänderung des Förderstroms ohne Unterbrechung und ohne schädliche Stöße oder Beschleunigungen auf die Packgutstapel ermöglicht. Damit wird ein Verziehen oder Versatz der Packgutstapel auch bei hohen Fördergeschwindigkeiten vermieden. Die Weiche kann durch Schalter oder Sensoren an der Verpackungsstation umgestellt werden, sobald dort eine Störung auftritt. Das Umstellen erfolgt innerhalb weniger Sekunden. Zur Umstellung der Weiche wird der Förderantrieb der Weiche abgeschaltet, die Weiche aus der Förderebene in eine Schwenkebene angehoben und um einen Winkel von beispielsweise 120° geschwenkt, danach wieder abgesenkt und der Förderantrieb, nun in umgekehrter Förderrichtung fördernd, eingeschaltet.

Die Weiche kann von einer vertikalen Welle getragen werden, die Teil der Hub- und Senkvorrichtung ist. Der Schwenkantrieb der Weiche kann an diese Welle angreifen.

Als Vorrichtung zum Heben und Senken der Weiche dient zweckmäßigerweise eine pneumatische Kolben-Zylinder-Einheit. Der Bogenwinkel α der Weiche entspricht dem halben Winkel ß der Verzweigung. Je schlanker die Verzweigung ist, desto kleiner ist der Winkel der bogenförmigen Bahn der Weiche und umso größer ist der Winkel, um den die Weiche gedreht werden muß. Der bogenförmige Verlauf der Weiche ermöglicht eine stoßund ruckfreie Überführung des Fördergutes vom Zubringer auf eine der beiden Förderlinien.

Damit bei einer Störung an einer Umschnürungs-, Umhüllungsoder Verpackungsstation in einer Förderlinie der Zubringer nicht abgeschaltet werden muß, ist zwischen Zubringer und Weiche eine als Staubereich dienende selbständig antreibbare Fördervorrichtung angeordnet, die mehrere Packgutstapel während der Umstellung der Weiche aufnehmen und danach im beschleunigten Rhythmus an die nun angeschlossene Förderlinie abgeben kann. Danach arbeitet diese Staubereich-Fördervorrichtung synchron zum Zubringer.

In der folgenden Beschreibung wird die Erfindung unter Bezugnahme auf Zeichnungen von Ausführungsbeispielen näher erläutert. Die Zeichnungen zeigen in:
- Fig. 1: eine Draufsicht auf einen Teil einer Förderanlage mit einer Weiche nach der Erfindung;
- Fig. 2: eine Ansicht der Förderanlage gemäß Fig. 1 aus einer Blickrichtung gemäß Pfeil II in Fig. 1;
- Fig. 3: eine Draufsicht entsprechend Fig. 1 mit einer stärker gekrümmten Weiche.

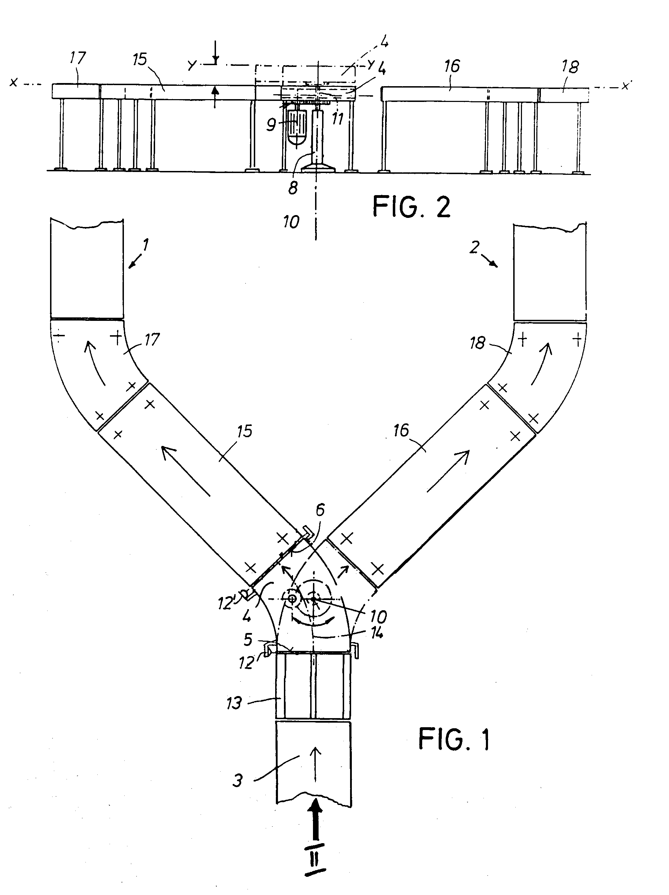

Die Fig. 1 und 2 zeigen eine Förderanlage für Packgutstapel mit einer ersten Förderlinie 1 und einer dazu parallel verlaufenden zweiten Förderlinie 2. Die beiden Förderlinien 1 und 2 sind über eine Weiche 4 mit einem Zubringer 3 verbindbar. Die Weiche 4 weist nur eine bogenförmige Bahn 14 auf, die um eine vertikale Achse 10 in zwei Umlenkstellungen schwenkbar ist.

Ferner hat die Weiche einen eigenen reversierbaren Antrieb. In einer ersten Umlenkstellung ist ein erstes Bahnende 5 der Weiche 4 an den Zubringer 3 und ein zweites Bahnende 6 der Weiche an die erste Förderlinie 1 angeschlossen. In dieser Stellung fördert die Weiche 4 vom Bahnende 5 zum Bahnende 6 hin. In der zweiten, in Fig. 1 in Phantomlinien gezeichneten Umlenkstellung ist das erste Bahnende 5 der Weiche an die zweite Förderlinie 2 angeschlossen und das zweite Bahnende 6 der Weiche an den Zubringer 3. In dieser zweiten Umlenkstellung fördert die Weiche vom Bahnende 6 zum Bahnende 5 hin. Der Förderantrieb muß also gegen über der ersten Stellung in umgekehrter Richtung fördern. Dementsprechend ist die Förderrichtung des reversierbaren Förderantriebes in Abhängigkeit von den beiden Umlenkstellungen der Weiche 4 geschaltet. Die Förderlinien 1 und 2, der Zubringer 3, die Weiche 4, die Verbindungsförderer 15 und 16 sowie die Kurvenförderer 17 und 18 sind zweckmäßigerweise Bandförderer, insbesondere solche mit zwei auf Abstand geführten Förderbändern. Es ist aber auch möglich, die Förderanlage aus Rollen- oder Röllchenförderern zusammenzusetzen.

An den Bahnenden 5 und 6 der Weiche 4 sind Sensoren 11 und 12 angeordnet, die verhindern, daß die Weiche 4 umgestellt wird, solange sich im Bereich der Bahnenden 5 und 6 ein Packgutstapel befindet. Diese Sensoren verhindern also, daß sich beim Umstellen der Weiche 4 ein Packgutstapel im Bereich dieser Bahnenden 5 und 6 befindet. Zwischen dem Zubringer 3 und der Weiche 4 ist eine als Staubereich dienende, unabhängig vom Zubringer 3 antreibbare Fördervorrichtung 13 angeordnet. Auf diese Fördervorrichtung 13 schieben sich bei weiterlaufendem Zubringer drei, vier oder fünf Packgutstapel auf, während die Weiche umgestellt wird. Nach der Umstellung der Weiche 4 kann diese Fördervorrichtung 13 mit beschleunigtem Rhythmus die gestauten Packgutstapel an die Weiche 4 und die angeschlossene Förderlinie 1 oder 2 abgeben.

Der Zubringer 3 und die Förderlinien 1 und 2 sind geradlinig und parallel zueinander angeordnet. Die Längsachse des Zubringers 3 verläuft in der Mitte zwischen den Förderlinien 1 und 2. Zwischen der Weiche 4 und den Förderlinien 1 und 2 sind zwei gleiche geradlinige Verbindungsförderer 15 und 16 und zwei gleiche Kurvenförderer 17 und 18 angeordnet. Die kurvenförmige Bahn dieser Kurvenförderer entspricht der bogenförmigen Bahn 14 der Weiche 4. Diese Anordnung hat den Vorteil, daß sie aus gleichartigen Fördervorrichtungen zusammensetzbar ist. Mit diesen Fördervorrichtungen lassen sich auch Förderanlagen mit mehreren Zubringern und zahlreichen Förderlinien zusammenstellen.

Wie Fig. 2 zeigt, wird die Weiche 4 von einer Welle 11 getragen, die Teil einer Hub- und Absenkvorrichtung 8 ist. Mit Hilfe dieser Hub- und Absenkvorrichtung läßt sich beim Umstellen der Weiche diese aus der Transportebene X-X in die Schwenkebene Y-Y anheben und in der neuen Umlenkstellung wieder in die Transportebene X-X absenken. Zum Umschwenken der Weiche 4 dient ein Schwenkantrieb 9, der an der Welle 11 angreift.

Die aus Fig. 1 ersichtliche Weiche 4 muß um etwa 135° um die Achse 10 geschwenkt werden, um von der einen Umlenkstellung in die andere zu gelangen.

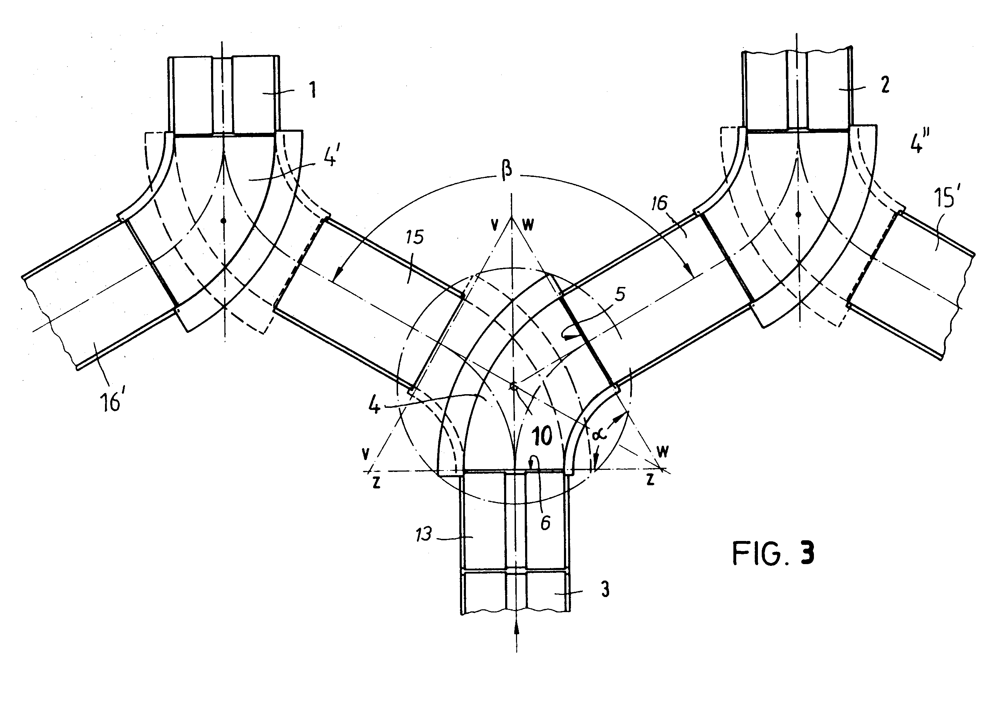

Bei der Ausführungsform nach Fig. 3 ist der Bogenwinkel α der Weiche 4 größer als bei der Weiche nach Fig. 1 Bei dieser stärker gekrümmten Weiche muß die Weiche um etwa 120° geschwenkt werden, um von einer Umlenkstellung in die andere zu gelangen.

Die Lichtschranken oder Sensoren, welche verhindern sollen, daß die Weiche umgestellt wird, solange sich ein Packgutstapel im Bereich der Bahnenden 5,6 der Weiche 4 befindet, können gemäß Fig. 3 in den Ebenen V-V, W-W und Z-Z installiert sein, sie können aber auch fest an der verschwenkbaren Weiche 4 angeordnet sein. Diese Sensoren verzögern das Abschalten des Weichenantriebes, bis ein Packgutstapel voll von der Weiche übernommen worden ist oder ganz an die weiterführende Fördervorrichtung 15 oder 16 abgegeben ist. Erst dann wird der Förderantrieb der Weiche 4 abgestellt und die Weiche verschwenkt.

### Bezugszeichenliste:

- 1: erste Förderlinie
- 2: zweite Förderlinie
- 3: Zubringer
- 4: Weiche
- 5: Bahnende
- 6: Bahnende
- 8: Hub- und Absenkvorrichtung
- 9: Schwenkantrieb
- 10: Achse
- 11: Welle
- 12,12′: Sensor, Lichtschranke
- 13: Staubereich-Fördervorrichtung
- 14: bogenförmige Bahn
- 15: Verbindungsförderer
- 16: Verbindungsförderer
- 17: Kurvenförderer
- 18: Kurvenförderer

## Patentansprüche

1. Förderanlage für Packgutstapel mit einer Weiche (4), einen Zubringer (3) mit einem Förderer (15) einer ersten Förderlinie (1) oder einem Förderer (16) einer zweiten Förderlinie (2) verbindet und welche mittels eines Schwenkantriebes (9) um eine vertikale, in gleichem Abstand zu ihren Bahnenden angeordnete Achse (10) schwenkbar ist, wobei in einer ersten Umlenkstellung ein erstes Bahnende (5) der Weiche (4) an den zubringer (3) und ein zweites Bahnende (6) an den Förderer (15) der ersten Förderlinie (1) anschließt und in einer zweiten Umlenkstellung das erste Bahnende (5) an den Förderer (16) der zweiten Förderlinie (2) und das zweite Bahnende (6) an den Zubringer (3) anschließt,
dadurch gekennzeichnet, daß die Weiche (4) nur eine bogenförmige Bahn (14) sowie einen eigenen reversierbaren Förderantrieb und eine Hub- und Absenkvorrichtung (8) zum Versetzen der Weiche (4) aus einer Transportebene (X-X) in eine Schwenkebene (Y-Y) und zurück aufweist.

2. Förderanlage nach Anspruch 1, dadurch gekennzeichnet, daß die Förderrichtung des reversierbaren Förderantriebes der Weiche (4) in Abhängigkeit von den beiden Umlenkstellungen der Weiche (4) geschaltet ist.

3. Förderanlage nach Anspruch 1 oder 2, dadurch gekennzeichnet, daß die Weiche (4) von einer vertikalen Welle (11) getragen ist, die Teil der Hub- und Absenkvorrichtung (8) ist, welche von einer pneumatischen Kolben-Zylinder-Einheit gebildet ist.

4. Förderanlage nach einem der Ansprüche 1 bis 3, dadurch gekennzeichnet, daß der reversierbare Förderantrieb der Weiche (4) ein Bandförderer ist.

5. Förderanlage nach einem der Ansprüche 1 bis 4, dadurch gekennzeichnet, daß an den Bahnenden (5,6) der Weiche (4) Sensoren (12,12') angeordnet sind, die bei einem durch eine Störung in einer Hauptförderlinie (1) oder Nebenförderlinie (2) ausgelösten Umstellsignal für die Weiche (4) eine Verzögerung des Umstellens bewirken, bis ein Packgutstapel das Bahnende (5 oder 6) der Weiche (4) passiert hat.

6. Förderanlage nach einem der Ansprüche 1 bis 5, dadurch gekennzeichnet, daß zwischen dem Zubringer (3) und der Weiche (4) eine als Staubereich dienende, unabhängig vom Zubringer (3) antreibbare Fördervorrichtung (13) angeordnet ist.

7. Förderanlage nach einem der Ansprüche 1 bis 6, dadurch gekennzeichnet, daß der Zubringer (3) und die erste Förderlinie (1) und die zweite Förderlinie (2) geradlinig sind und parallel zueinander angeordnet sind und die Längsachse des Zubringers (3) in der Mitte zwischen der ersten Förderlinie (1) und der zweiten Förderlinie (2) verläuft und zwischen der Weiche (4) und der ersten Förderlinie (1) und der zweiten Förderlinie (2) zwei gleiche geradlinige Verbindungsförderer (15,16) und zwei gleiche Kurvenförderer (17,18) angeordnet sind, deren bogenförmige Bahn der bogenförmigen Bahn (14) der Weiche (4) entspricht.

## Claims

1. A conveyor installation for stacks of packaging articles comprising a switching member (4) which connects a feeder (3) to a conveyor (15) of a first conveyor line (1) or a conveyor (16) of a second conveyor line (2) and which is pivotable by means of a pivotal drive (9) about a vertical axis (10) which is arranged at the same spacing relative to its path ends, wherein in a first deflection position a first path end (5) of the switching member (4) adjoins the feeder (3) and a second path end (6) adjoins the conveyor (15) of the first conveyor line (1) and in a second deflection position the first path end (5) adjoins the conveyor (16) of the second conveyor line (2) and the second path end (6) adjoins the feeder (3), characterised in that the switching member (4) has only one arcuate path (14) and its own reversible conveyor drive and a raising and lowering device (8) for displacing the switching member (4) out of a transportation plane (X-X) into a pivoting plane (Y-Y) and back again.

2. A conveyor installation according to claim 1 characterised in that the conveyor direction of the reversible conveyor drive of the switching member (4) is changed in dependence on the two deflection positions of the switching member (4).

3. A conveyor installation according to claim 1 or claim 2 characterised in that the switching member (4) is carried by a vertical shaft (11) which is part of the raising and lowering device (8) which is formed by a pneumatic piston-cylinder unit.

4. A conveyor installation according to one of claims 1 to 3 characterised in that the reversible conveyor drive of the switching member (4) is a belt conveyor.

5. A conveyor installation according to one of claims 1 to 4 characterised in that disposed at the path ends (5, 6) of the switching member (4) are sensors (12, 12') which, in the event of a reversal signal for the switching member (4), which signal is triggered off by a fault in a main conveyor line (1) or a secondary conveyor line (2), cause a delay in reversal until a stack of packaging articles has passed the path end (5 or 6) of the switching member (4).

6. A conveyor installation according to one of claims 1 to 5 characterised in that disposed between the feeder (3) and the switching member (4) is a conveyor arrangement (13) which serves as an accumulation region and which is drivable independently of the feeder (3).

7. A conveyor installation according to one of claims 1 to 6 characterised in that the feeder (3) and the first conveyor line (1) and the second conveyor line (2) are straight and are arranged parallel to each other and the longitudinal axis of the feeder (3) extends in the centre between the first conveyor line (1) and the second conveyor line (2) and disposed between the switching member (4) and the first conveyor line (1) and the second conveyor line (2) are two identical straight connecting conveyors (15, 16) and two identical curve conveyors (17, 18) whose arcuate path corresponds to the arcuate path (14) of the switching member (4).

## Revendications

1. Convoyeur pour paquets d'objets doté d'un dispositif d'aiguillage (4) reliant une ligne affluente (3) à un convoyeur (15) d'une première ligne de transport (1) ou à un convoyeur (16) d'une seconde ligne de transport (2) et pouvant pivoter à l'aide d'un dispositif de pivotement (9) autour d'un axe vertical (10) équidistant de ses deux extrémités de voie, dans lequel, dans une première position de déviation, une première extrémité de voie (5) du dispositif d'aiguillage (4) est reliée à la ligne affluente (3) tandis qu'une seconde extrémité de voie (6) est reliée au convoyeur (15) de la première ligne de transport (1) et dans une seconde position de déviation, la première extrémité de voie (5) est reliée au convoyeur (16) de la seconde ligne de transport (2) et la seconde extrémité de voie (6) est reliée à la ligne affluente (3),
caractérisé en ce que le dispositif d'aiguillage (4) comprend uniquement une voie curviligne (14) ainsi que son propre dispositif d'entraînement réversible et un dispositif de montée et de descente (8) pour faire passer le dispositif d'aiguillage (4) d'un plan de transport (X-X) dans un plan de pivotement (Y-Y) et vice-versa.

2. Convoyeur selon la revendication 1, caractérisé en ce que la direction de transport du dispositif d'entraînement réversible du dispositif d'aiguillage (4) est fonction des deux positions de déviation du dispositif d'aiguillage (4).

3. Convoyeur selon la revendication 1 ou 2, caractérisé en ce que le dispositif d'aiguillage (4) est supporté par un arbre vertical (11), qui fait partie du dispositif de montée et de descente (8), formé par un système pneumatique piston-vérin.

4. Convoyeur selon l'une des revendications 1 à 3, caractérisé en ce que le dispositif d'entraînement réversible du dispositif d'aiguillage (4) est un convoyeur à courroie.

5. Convoyeur selon l'une des revendications 1 à 4, caractérisé en ce qu'aux extrémités de voie (5, 6) du dispositif d'aiguillage (4) sont prévus des capteurs (12, 12') qui lorsqu'ils reçoivent un signal de déviation déclenché par un dérangement dans une ligne de transport principale (1) ou une ligne de transport auxiliaire (2), temporisent la déviation du dispositif d'aiguillage (4) jusqu'à ce qu'un paquet d'objets ait dépassé l'extrémité de voie (5 ou 6) du dispositif d'aiguillage (4).

6. Convoyeur selon l'une des revendications 1 à 5, caractérisé en ce qu'entre la ligne affluente (3) et le dispositif d'aiguillage (4) est prévu un dispositif de transport (13) à entraînement indépendant de la ligne affluente (3) et servant de zone tampon.

7. Convoyeur selon l'une des revendications 1 à 6, caractérisé en ce que la ligne affluente (3), la première ligne de transport (1) et la seconde ligne de transport (2) sont rectilignes et parallèles entre elles et en ce que l'axe longitudinal de la ligne affluente (3) passe à équldistance entre la première ligne de transport (1) et la seconde ligne de transport (2) et en ce qu'entre le dispositif d'aiguillage (4) et la première ligne de transport (1) et la seconde ligne de transport (2) sont prévus deux convoyeurs de raccordement rectilignes identiques (15, 16) ainsi que deux convoyeurs curvilignes identiques (17, 18), dont la courbure correspond à la courbure (14) du dispositif d'aiguillage (4).
